# EUROPEAN PATENT APPLICATION

(11) **EP 2 555 145 A1**
(43) Date of publication of application: **06.02.2013**
(21) Application number: 12178729.5
(22) Date of filing: 31.07.2012
(51) Int. Cl.: G06Q 20/02

(54) **Credit transaction system, apparatus and terminal for granting credit and method thereof**

(30) Priority: 01.08.2011 KR 20110076715
(71) Applicant: Samsung Electronics Co., Ltd., Suwon-si, Gyeonggi-do, 443-742 (KR)
(72) Inventor: Hwang, Cheol-Ju, Gyeonggi-do (KR); Yang, Do-Jun, Gyeonggi-do (KR); Seo, Jin-Goo, Gyeonggi-do (KR)
(74) Representative: Jenkins, Richard Gavin

(57) **Abstract**

A credit transaction system, apparatus, and method are capable of granting credit to other people. The credit transaction system includes a relay unit, a user terminal, and a seller terminal. The relay unit stores credit information including at least one of credit card information and account information of a credit owner, user information and terminal information on a user designated by the credit owner, and credit limit information on a limit usable by the user. The user terminal transmits the user's terminal information to a seller terminal corresponding to the seller. The seller terminal transmits billing records on the goods or service purchased by the user in response to the received user's terminal information. Here, the relay unit performs an authentication process for the user corresponding to the user terminal, and then relays to process payment regarding the billing records via the credit information within the credit limit information.

## Description

### TECHNICAL FIELD OF THE INVENTION

The present disclosure relates to a credit transaction system, an apparatus, and a terminal capable of grading credit to other people, and a method thereof.

### BACKGROUND OF THE INVENTION

Generally, a credit business company such as a credit card company, a bank, etc. selects a person who has a predetermined qualification, sets a credit, and issues a credit card so that the person may make a transaction via a credit on line or off-line. A user can request payment regarding goods or a service purchased from a seller affiliated to a relevant credit card service via credit on line or off-line. The seller receives an amount regarding the soled goods or service from the credit business company, not the user. At this point, the credit business company makes an advanced payment after deduction of a charge of a predetermined rate with respect to billing request requested by the seller, and requests the user to pay an amount afterward in bulk with respect to goods or services which the user has purchased on credit using a relevant credit card for a predetermined period.

Such a credit transaction resolves an inconvenience that a user should withdraw cash case by case from a bank or an Automated Teller Machine (ATM) and carry the same with him in order to purchase goods, removes a danger of cash loss, and enables the user to purchase goods or a service even when the user does not have cash at the moment, so that the credit transaction serves as a representative means replacing a cash transaction.

However, since a credit business has a characteristic that a credit business company pays an amount for a user's purchase in advance to a seller based on the user's credit and collects the amount from the user afterward, a risk is generated. To minimize and manage the risk in a credit transaction, a procedure for issuing a credit card is complicated and an issue object is limited. That is, basically, a credit card company should issue a credit card to a person who has become a predetermined age legally (nineteen, for example, in Korea), and also a credit business company examines whether a user who has requested credit transaction has a constant income to issue a credit card, so that a procedure for issuing a credit card is complicated and an issue object is limited. Particularly, where a minor or a domestic resident who has foreign nationality, even when the minor or the domestic resident has a legal representative or a surety who can make credit transaction, the minor or the domestic resident should require approval of the legal representative or the surety every time in order to make credit transaction, so that free credit transaction is limited.

### SUMMARY OF THE INVENTION

To address the above-discussed deficiencies of the prior art, it is a primary object to provide at least the advantages described below. Accordingly, an aspect of the present disclosure is to provide a credit transaction system, an apparatus, and a terminal capable of grading credit to other people, and a method thereof, that enables or extends credit transaction via an acquaintance or a legal representative who can make credit transaction in the situation where a person cannot make credit transaction or has a limitation in credit transaction such as a minor and a domestic resident who has foreign nationality.

In accordance with an aspect of the present disclosure, a credit transaction system is provided. The system includes a relay unit for storing credit information including at least one of credit card information and account information of a credit owner, user information and terminal information on a user designated by the credit owner, and credit limit information on a limit usable by the user, a user terminal owned by the user who has purchased goods or a service from a seller, and transmitting the user's terminal information to a seller terminal corresponding to the seller, and a seller terminal for transmitting billing records on the goods or service purchased by the user in response to the received user's terminal information. Here, the relay unit may perform an authentication process for the user corresponding to the user terminal, and then relay to process payment for the billing records via the credit information within the credit limit information.

In accordance with another aspect of the present disclosure, a credit transaction system is provided. The system includes a credit owner terminal for storing at least one of credit card information and account information of a credit owner, user information and terminal information on a user designated by the credit owner, and credit limit information on a limit usable by the user, a user terminal owned by the user who has purchased goods or a service from a seller, and transmitting the user's terminal information to a seller terminal corresponding to the seller, and a seller terminal for transmitting billing records on the goods or service purchased by the user to the user terminal in response to the received user's terminal information. Here, the credit owner terminal may receive billing records from the user terminal, and request payment such that payment regarding the billing records may be processed via the credit information within the credit limit information.

At this moment, the relay unit or the credit owner terminal may transmit remaining amount information excluding an accumulated amount paid by the user for a period set by the credit limit information to the user terminal.

In accordance with still another aspect of the present disclosure, a credit transaction apparatus is provided. The apparatus includes a credit grant information storage unit for storing at least one of credit card information and account information of a credit owner, user information and terminal information regarding a user designated by the credit owner, and credit limit information regarding a limit usable by the user, a payment request receiver for receiving a payment request including billing records regarding goods or a service purchased by the user, a payment request transfer unit for, when sum of an accumulated amount paid by the user and the billing records for a predetermined period is within the credit limit information, transferring a payment request regarding the billing records to a payment server of a credit business company based on the credit information, and a payment complete transfer unit for, after payment approval by the payment server, transmitting payment complete information to at least one of a terminal of the user and a terminal of a seller from which the user has purchased the goods or service.

The apparatus may further include an excessive payment determine unit for, when sum of the accumulated amount and the billing records exceeds the credit limit information, determining whether a terminal of the credit owner is able to pay the exceeding amount. In this example, when payment is allowed by the terminal of the credit owner, the payment request transfer unit may request the payment server of the credit business company to pay the billing records.

The apparatus may further include an authentication processor for performing an authentication process based on the user's terminal in response to a payment request received via the payment request receiver.

In accordance with further another aspect of the present disclosure, a terminal capable of granting a credit to other people is provided. The terminal includes a credit grant information storage unit for storing at least one of credit card information and account information of a user, other people information and terminal information regarding other people designated by the user, and credit grant information including credit limit information regarding a limit usable by other people, a payment request receiver for receiving a payment request including billing records regarding goods or a service purchased by other people, a payment request transfer unit for, when sum of an accumulated amount paid by other people and the billing records for a predetermined period is within the credit limit information, transferring a payment request regarding the billing records to a payment server of a credit business company based on the credit information, and a payment complete transfer unit for, after payment approval by the payment server, transmitting payment complete information to at least one of a terminal of other people and a terminal of a seller who has sold the goods or service to other people.

In accordance with yet another aspect of the present disclosure, a credit transaction method is provided. The method includes storing credit information including at least one of credit card information and account information of a credit owner, user information and terminal information regarding a user designated by the credit owner, and credit limit information regarding a limit usable by the user, receiving a payment request including billing records regarding goods or a service purchased by the user, when sum of an accumulated amount paid by the user and the billing records for a predetermined period is within the credit limit information, transferring a payment request regarding the billing records to a payment server of a credit business company based on the credit information, and after payment approval by the payment server, transmitting payment complete information to at least one of a terminal of the user and a terminal of a seller from which the user has purchased the goods or service.

The method may further include, when sum of the accumulated amount and the billing records exceeds the credit limit information, determining whether a terminal of the credit owner is able to pay the exceeding amount. In this example, the payment request transfer process, when payment is allowed by the terminal of the credit owner, may transfer a payment request regarding the billing records to the payment server of the credit business company.

The method may further include performing an authentication process based on a terminal of the user in response to a payment request received via the payment request reception process.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

The above and other aspects, features and advantages of certain exemplary embodiments of the present disclosure will be more apparent from the following description taken in conjunction with the accompanying drawings in which:

FIG. 1 illustrates a block diagram of a credit transaction system according to an exemplary embodiment of the present disclosure;

FIG. 2 illustrates a block diagram of a credit transaction system according to an exemplary embodiment of the present disclosure;

FIG. 3 illustrates a block diagram of a credit transaction apparatus according to an exemplary embodiment of the present disclosure; and

FIG. 4 illustrates a credit transaction method according to an exemplary embodiment of the present disclosure.

Throughout the drawings, like reference numerals will be understood to refer to like parts, components and structures.

### DETAILED DESCRIPTION OF THE INVENTION

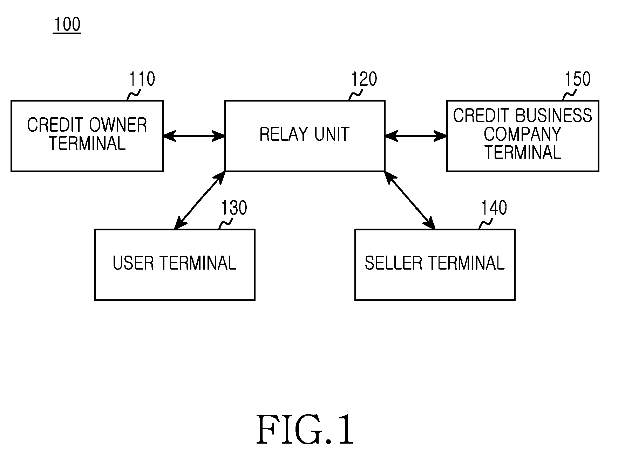

FIGURES 1 through 4, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged communication system.

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present disclosure are provided for illustration purpose only and not for the purpose of limiting the invention as defined by the appended claims and their equivalents.

The present disclosure relates to a credit transaction system, an apparatus, and a terminal capable of grading credit to other people, and a method thereof, that enables or extends credit transaction via an acquaintance or a legal representative who can make credit transaction in the example where a person cannot make credit transaction or has a limitation in credit transaction such as a minor and a domestic resident who has foreign nationality.

FIG. 1 illustrates a block diagram of a credit transaction system according to an exemplary embodiment of the present disclosure.

Referring to FIG. 1, the credit transaction system may include a credit owner terminal 110, a relay unit 120, a user terminal 130, a seller terminal 140, and a credit business company terminal 150.

The credit owner terminal 110 has a bank account and a credit card, and can perform a credit transaction. The credit owner terminal 110 may access the relay unit 120 via a network (not shown). Here, the credit owner terminal 110 may include not only a Personal Digital Assistant (PDA), a cellular phone, a smart phone, a notebook, a tablet, etc. classified for each terminal type, and a mobile communication terminal such as a Personal Communication Service (PCS) phone, a Global System for Mobile communications (GSM) phone, a Wideband Code Division Multiple Access (W-CDMA) phone, a CDMA-2000 phone, a Mobile Broadband System (MBS) phone, etc. classified for each communication scheme, but also a computer that can access the network via a wired line. In addition, the network may include not only the Internet network, but also a communication network such as a CDMA, W-CDMA, a GSM, a Long Term Evolution (LTE), an Evolved Packet Core (EPC), etc., and an access network of the next generation mobile communication system which will be realized in the future, and a cloud computing access network between a cloud computing service providing apparatus and a terminal.

A credit owner may access the relay unit 120 via the network through the credit owner terminal 110, and then register credit information including at least one of credit card information, point card information, check card information, and account information owned by the credit owner. In addition, the credit owner may designate a person who cannot perform credit transaction or has a limitation in credit transaction such as a minor or a domestic resident having foreign nationality as a user who uses credit information of the credit owner, and may register user information and terminal information regarding the designate user, and credit limit information usable by the designated user, etc. Here, the user information may include information such as a name, a resident registration number, an address regarding the designated user, and a relation with the credit owner. In addition, the terminal information may include a unique number, an Internet Protocol (IP) address, a Universal Subscriber Identity Module (USIM) number, etc. regarding the terminal owned by the designated user.

The relay unit 120 may store information regarding the credit owner, credit information registered by a relevant credit owner, user information and terminal information regarding a user designated by the credit owner, credit limit information given to a user by the credit owner, etc. At this point, the relay unit 120 may match information regarding the credit owner with information regarding the designated user and store the same in the form of a table. In addition, the relay unit 120 may perform an authentication process on the user designated by the credit owner using the user terminal 130, and request the credit business company terminal 150 to perform payment for the user's purchase using the credit information of the credit owner depending on the performance result of the authentication process.

The user terminal 130 denotes a terminal owned by the user designated by the credit owner. Like the owner terminal 110, the user terminal 130 may include not only a mobile communication terminal but also a computer, and access the relay unit 130 and the seller terminal 140 via the network. In addition, the user terminal 130 may purchase goods or a service within the credit limit range allowed by the credit owner, transmit the terminal information of the user to the seller terminal 140 with respect to the purchased goods or service, and request billing records regarding the goods or service. At this point, the user terminal 130 transfers the billing records received from the seller terminal 140 to the relay unit 120, and request payment for the relevant billing records.

The terminal may be an electronic device such as, for example, a laptop, a smart phone, a net book, a mobile internet device, an ultra mobile PC, a tablet personal computer, a mobile telecommunication terminal, PDA having a camera and the like herein, just to name some of the possibilities. The seller terminal 140 denotes a terminal owned by a seller who sells goods or a service. The seller terminal 140 may access the relay unit 120 and the user terminal 130 via the network to transmit the billing records regarding the goods or service purchased by the user, and receive payment complete information depending on payment of the transmitted billing records. At this point, when receiving terminal information including a request signal of billing records from the user terminal 130 with respect to goods or a service sold to the user, the seller terminal 140 may transmit the relevant billing records to the user terminal 130, or transmit the relevant billing records and terminal information regarding the user terminal 130 to the relay unit 120, and request payment.

The credit business company terminal 150 may be connected with the relay unit 120 via the network, and processes payment regarding credit transaction such as a credit card, account transfer, a point card, a check card, etc. A payment processing method of a credit transaction by the credit business company terminal 150 uses a known technology, and detailed description thereof is omitted.

Such a construction of the credit transaction system 100 allows the relay unit 120 to store credit information of the credit owner, user information and terminal information of a user designated by the credit owner, and credit limit information usable by a user allowed by the credit owner. When the designated user purchases goods or a service and then requests a payment thereof, the relay unit 120 performs an authentication process for the user using the user terminal 130, and then requests the credit business company terminal 150 to perform payment regarding the user's purchase based on the credit information of the credit owner depending on the performance result thereof. After the payment is approved by the credit business company terminal 150, the relay unit 120 transmits payment complete information including a receipt received from the credit business company terminal 150 to at least one of the user terminal 130 and the seller terminal 140, thereby relaying the payment process regarding the user. At this point, as a user authenticating method using the user terminal 130, an One Time Password (OTP) transmission method based on a Short Message Service (SMS) may be used. Alternatively, the relay unit 120 may request the user terminal 130 to transmit an authentication document and transmit the authentication document received from the user terminal 130 to an authentication organization, thereby performing the authentication process based on the authentication document. However, the user authenticating method is not limited thereto but various modified user authenticating methods may be used.

The relay unit 120 may be realized to accumulate an amount paid by the user for a period set by the credit owner or a set period corresponding to credit information, and transmit a remaining amount excluding the amount accumulated for the period set by the credit limit information set by the credit owner to the user terminal 130 using a message.

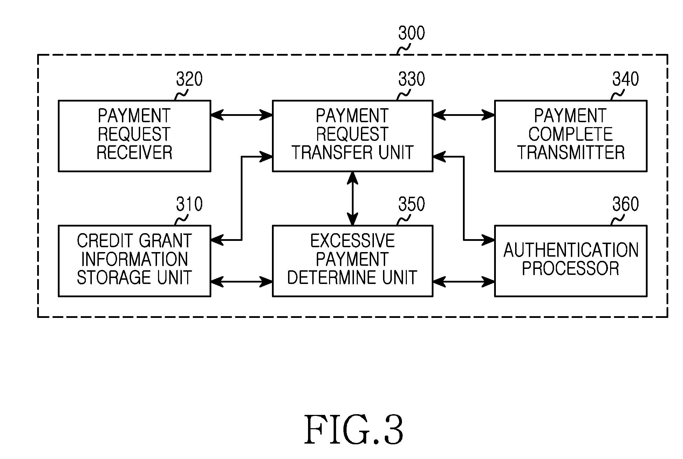

In addition, when a new payment request regarding the user's purchase is received from the user terminal 130 or the seller terminal 140, the relay unit 120 may compare the remaining amount excluding the amount accumulated for the period set by the credit limit information set by the credit owner with a billing record amount corresponding to a relevant payment request to determine whether payment regarding the relevant payment request can be relayed. The construction and operation of the relay unit 120 are described in more detail with reference to FIG. 3.

The method described above in relation with FIG. 1 under of the present invention may be provided as one or more instructions in one or more software modules stored in the respective terminals and the relay unit.

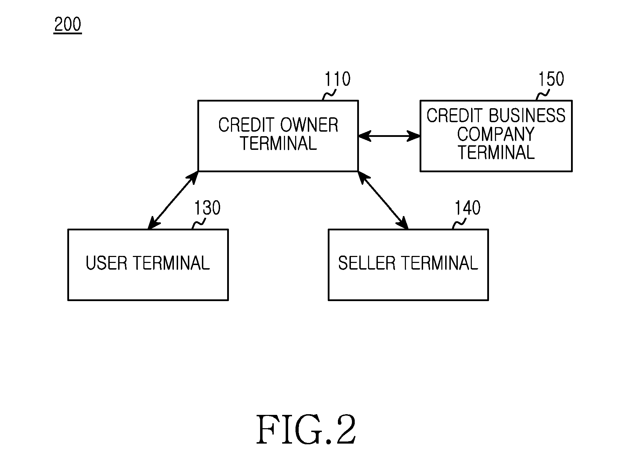

FIG. 2 illustrates a block diagram of a credit transaction system according to an exemplary embodiment of the present disclosure.

Referring to FIG. 2, the credit transaction system 200 may include a credit owner terminal 110, a user terminal 130, a seller terminal 140, and a credit business company terminal 150. Here, since the functions and operations of the credit owner terminal 110, the user terminal 130, the seller terminal 140, and the credit business company terminal 150 are the same or similar to those of the credit owner terminal 110, the user terminal 130, the seller terminal 140, and the credit business company terminal 150 of the credit transaction system 200 of FIG. 1, the same reference numbers are used. In describing the credit transaction system 200 in FIG. 2 according to the present disclosure, descriptions of the same functions and operations are omitted.

The credit transaction system 200 may allow the credit owner terminal 110 to directly store credit information of the credit owner, user information and terminal information regarding the user designated by the credit owner, and credit limit information regarding a limit usable by the user in stead of allowing the relay unit 120 of FIG. 1 to store credit information of the credit owner, user information and terminal information regarding a user designated by the credit owner, and credit limit information regarding a limit usable by the user.

In this example, the user terminal 130 may transfer billing records received from the seller terminal 140 to the credit owner terminal 110, and request the credit owner terminal 110 to perform payment for the relevant billing records. In addition, when receiving terminal information including a request signal of billing records from the user terminal 130 with respect to goods or a service sold to the user, the seller terminal 140 may transmit the relevant billing records to the user terminal 130, or transmit the relevant billing records and terminal information regarding the user terminal 130 and request the credit owner terminal 110 to perform the payment. In addition, the credit owner terminal 110 may request the credit business company terminal 150 to perform a payment process for the user's purchase based on credit information of the credit owner. After the payment is approved by the credit business company terminal 150, the credit owner terminal 110 may transmit payment complete information including a receipt received from the credit business company terminal 150 to at least one of the user terminal 130 and the seller terminal 140. In addition, for processing authentication for the user, the credit owner terminal 110 may have an authentication process function such as the relay unit 120 or entrust the authentication to a separate authentication perform organization to perform the authentication.

The credit owner terminal 110 may be realized to accumulate an amount paid by the user for a period set by the credit owner or a set period corresponding to the credit information, and transmit a remaining amount excluding the amount accumulated for the period set by the credit limit information set by the credit owner to the user terminal 130 using a message.

In addition, when a new payment request regarding the user's purchase is received from the user terminal 130 or the seller terminal 140, the credit owner terminal 110 may compare the remaining amount excluding the amount accumulated for the period set by the credit limit information set by the credit owner with a billing record amount corresponding to a relevant payment request to determine whether payment regarding the relevant payment request can be relayed.

By this construction, the system may be realized such that the relay unit 120 is omitted and direct credit grant and credit transaction between the credit owner and the user is possible. The construction and operation of the credit owner terminal 110 are described in more detail with reference to FIG. 3.

The method described above in relation with FIG. 2 under of the present invention may be provided as one or more instructions in one or more software modules stored in the respective terminals.FIG. 3 illustrates a block diagram of a credit transaction apparatus according to an exemplary embodiment of the present disclosure. The credit transaction apparatus 300 may be used as the relay unit 120 of FIG. 1 or the credit owner terminal 110 of FIG. 2. In the example where the credit transaction apparatus 300 is used as the credit owner terminal 100, the user terminal 130 may be referred to as "another person's terminal", and the credit owner terminal 110 may be referred to as the "user terminal" as a credit granting subject with respect to the other person's transaction on online or off line. However, hereinafter, to prevent confusion, a terminal of a user who is a subject granting a credit is called the credit owner terminal 110, and a terminal of a user who is a subject of a transaction behavior is called the user terminal 130.

Referring to FIG. 3, the credit transaction apparatus 300 may include a credit grant information storage unit 310, a payment request receiver 320, a payment request transfer unit 330, and a payment complete transfer unit 340. In addition, the credit transaction apparatus 300 may further include an excessive payment determine unit 350 and an authentication processor 360.

The credit grant information storage unit 310 may store information regarding the credit owner and credit information registered by the relevant credit owner, user information and terminal information regarding a user designated by the credit owner, credit limit information given to the user by the credit owner, etc. At this point, the relay unit 120 may match information regarding the credit owner with information regarding the designated user and store the same in the form of a table.

In the example where the user who has been given a credit limit by the credit owner purchases goods or a service, the payment request receiver 320 may receive a payment request signal including billing records from the user terminal 130 of the relevant user. Alternatively, the payment request receiver 320 may receive a payment request signal including billing records from the seller terminal 140 of a seller who has sold the goods or service to the relevant user. At this point, to prevent the same payment request signal from being doubly received from the user terminal 130 and the seller terminal 140, the payment request signal includes a transaction number between the user and the seller. In the example where the same transaction number is doubly received, the payment request receiver 320 may acknowledge only a first payment request signal and remove a latter payment request signal.

When sum of billing records included in the payment request signal and an accumulated amount paid by the user for a set period is within a credit limit range given to the relevant user, the payment request transfer unit 330 transfers the payment request signal to a payment server of a credit business company, that is, the credit business company terminal 150. At this point, the payment request transfer unit 330 incorporates the credit information of the credit owner into the payment request signal and transfers the same, thereby requesting the credit business company terminal 150 to process the payment for the billing records via the credit information of the credit owner.

When the payment is approved by the credit business company terminal 150, the payment complete transfer unit 340 receives a receipt regarding a payment process from the credit business company terminal 150, and may transfer payment complete information including the relevant receipt to at least one of the user terminal 130 and the seller terminal 140.

Therefore, even when credit transaction is not possible or is limited as in situations where a minor or a domestic resident has a foreign nationality, the minor or the domestic resident may be given a credit limit by a credit owner and make commercial transactions on line or off line directly within the credit limit.

When sum of billing records received from the user terminal 130 or the seller terminal 140 via the payment request receiver 320 and the user's accumulated amount exceeds the credit limit given to the user, the excessive payment determine unit 350 may transmit a message informing that an exceeding amount has occurred to the user's commercial transaction to the credit owner terminal 110, and receive whether payment for the relevant exceeding amount is possible. At this point, when the payment for the exceeding amount is allowed by the credit owner, the payment request transfer unit 330 transfers a payment request signal to the credit business company terminal 150. When the payment for the exceeding amount is allowed by the credit owner, the payment request transfer unit 330 may inform at least one of the user terminal 130 and the seller terminal 140 that the credit owner does not allow the payment for the amount exceeding the credit limit information, and accordingly transmit a message informing that payment has not been performed.

When receiving a payment request signal from the user terminal 130 or the seller terminal 140 via the payment request receiver 320, the authentication processor 360 may authenticate whether a user corresponding to the relevant payment request signal is a legal user who has been given the credit limit by the credit owner. For this purpose, the authentication processor 360 sends an OTP via a message to the user terminal 130 of the user designated by the credit owner, and receives a response from the user terminal 130 corresponding to the payment request, thereby authenticating whether the user is the legal user. Alternatively, the authentication processor 360 receives an authentication document from the user terminal 130, and compares the received authentication document with an authentication document registered in an authentication organization to authenticate whether the user is an authorized user. However, the authenticating method is not limited thereto but various authenticating methods may be applied.

The method described above in relation with FIG. 3 under of the present invention may be provided as one or more instructions in one or more software modules stored in the apparatus.

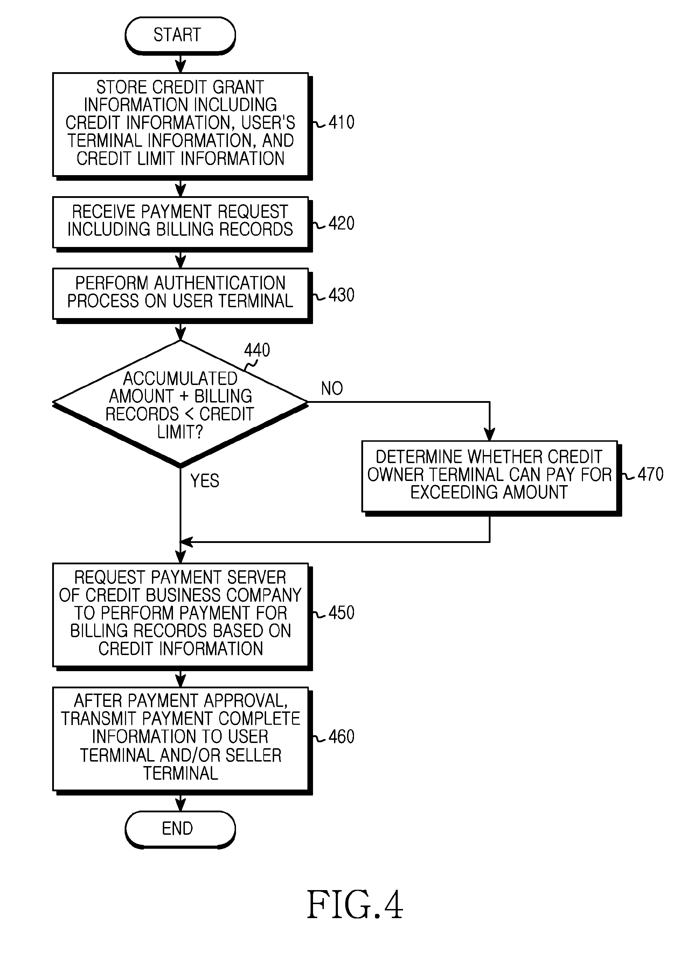

FIG. 4 illustrates a credit transaction method according to an exemplary embodiment of the present disclosure.

Though not shown, it should be preceded that a credit owner and a user subscribe to a relay unit and receive a grant of credit before performing a credit transaction.

For example, the credit owner requests the relay unit to register the credit owner's cellular phone number and a credit card/account number. The relay unit performs authentication on the credit owner's cellular phone number via the conventional authentication method via a cellular phone, and then registers the credit owner information. In addition, the user requests the relay unit to register the user's cellular phone number. The relay unit performs authentication on the user's cellular phone number via the conventional authentication method via a cellular phone, and then registers the user information.

Meanwhile, a method for granting the credit owner's credit to the user may be performed using the following two methods.

First, a method that allows the credit owner to directly grant a credit to the user is provided. First, the credit owner transfers content regarding the credit owner's cellular phone number, a cellular phone number of a user who is to be granted the credit, and a credit limit to the relay unit. After that, the relay unit determines whether the user's cellular phone number provided by the credit owner is registered. When the user is not a registered user, the relay unit performs authentication of the user. This may be performed via the cellular phone authentication. After that, the relay unit generates and registers a matching table of a credit owner and a user. In addition, the relay unit provides results regarding the newly generated credit transaction content to the credit owner and the user.

Second, a method that allows a user to be granted a credit by requesting a credit owner to grant the credit is provided. The user provides the user's cellular phone number and the credit owner's cellular phone number to a relay unit, and requests the relay unit to grant the credit. After that, the relay unit determines whether the credit owner is registered and requests the credit owner to grant the credit. After that, the credit owner makes a decision regarding whether to grant the credit, and provides content regarding whether to grant the credit and a credit limit to the relay unit.

Referring to FIGS. 3 and 4, the credit grant information storage unit 310 may store information regarding a credit owner, credit information registered by the relevant credit owner, user information and terminal information regarding a user designated by the credit owner, and credit limit information given to the user by the credit owner via a credit grant procedure between the credit owner and the user (S410). At this point, the relay unit 120 may match information regarding the credit owner with information regarding the designated user and store the same in the form of a table.

When the user who has been granted the credit limit by the credit owner purchases goods or a service, the payment request receiver 320 may receive a payment request signal including billing records from the user terminal 130 or the seller terminal 140 (S420).

When receiving the payment request signal from the user terminal 130 or the seller terminal 140 via the payment request receiver 320, the authentication processor 360 may authenticate whether a user corresponding to the relevant payment request signal is a legal user who has been given the credit limit by the credit owner (S430).

In the example where sum of billing records included in the payment request signal and an accumulated amount paid by the user for a set period is within the credit limit range given to the relevant user (S440), the payment request transfer unit 330 transfers the payment request signal to the credit business company terminal 150 (S450). At this point, the payment request transfer unit 330 incorporates the credit information of the credit owner into the payment request signal and transfers the same, thereby requesting the credit business company terminal 150 to process the payment for the billing records via the credit information of the credit owner.

When the payment is approved by the credit business company terminal 150, the payment complete transfer unit 340 may receive a receipt regarding the payment process from the credit business company terminal 150, and transmit payment complete information including the relevant receipt to at least one of the user terminal 130 and the seller terminal 140 (S460).

In the example where sum of billing records received from the user terminal 130 and the seller terminal 140 via the payment request receiver 320 and an accumulated amount of the user exceeds the credit limit given to the user (S440), the excessive payment determine unit 350 may transmit a message informing that an exceeding amount has occurred on the user's commercial transaction to the credit owner terminal 110, and receive whether payment for the relevant exceeding amount is possible as a reply (S470). At this point, when the payment for the exceeding amount is allowed by the credit owner, the payment request transfer unit 330 transfers a payment request signal to the credit business company terminal 150. When the payment for the exceeding amount is not allowed, the payment request transfer unit 330 may inform that the credit owner does not allow the payment for the amount exceeding the credit limit information to at least one of the user terminal 130 and the seller terminal 140, and accordingly transmit a message informing that the payment has not been made.

It will be appreciated that embodiments of the present disclosure according to the claims and description in the specification can be realized in the form of hardware, software or a combination of hardware and software.

Any such software may be stored in a computer readable storage medium. The computer readable storage medium stores one or more programs (software modules), the one or more programs comprising instructions, which when executed by one or more processors in an electronic device, cause the electronic device to perform a method of the present disclosure.

Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present disclosure.

Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

It will be appreciated that embodiments of the present disclosure according to the claims and description in the specification can be realized in the form of hardware, software or a combination of hardware and software.

Any such software may be stored in a computer readable storage medium. The computer readable storage medium stores one or more programs (software modules), the one or more programs comprising instructions, which when executed by one or more processors in an electronic device, cause the electronic device to perform a method of the present disclosure.

Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present disclosure.

Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

According to the embodiment of the present disclosure, credit transaction is possible or extended within a range allowed by a relevant credit owner via an acquaintance or a legal representative who can perform credit transaction even when credit transaction is impossible or is limited as in the situation where of a minor or a domestic resident has foreign nationality.

Program instructions to perform a method described herein, or one or more operations thereof, may be recorded, stored, or fixed in one or more computer-readable storage media. The program instructions may be implemented by a computer. For example, the computer may cause a processor to execute the program instructions. The media may include, alone or in combination with the program instructions, data files, data structures, and the like. Examples of computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The program instructions, that is, software, may be distributed over network coupled computer systems so that the software is stored and executed in a distributed fashion. For example, the software and data may be stored by one or more computer readable recording mediums. Also, functional programs, codes, and code segments for accomplishing the example embodiments disclosed herein can be easily construed by programmers skilled in the art to which the embodiments pertain based on and using the flow diagrams and block diagrams of the figures and their corresponding descriptions as provided herein. Also, the described unit to perform an operation or a method may be hardware, software, or some combination of hardware and software. For example, the unit may be a software package running on a computer or the computer on which that software is running.

Although the invention has been shown and described with reference to certain exemplary embodiments thereof, it will be understood by those skilled in the art that various changes in form and details may be made therein without departing from the spirit and scope of the invention as defined by the appended claims and their equivalents. Therefore, the scope of the present disclosure should not be limited to the above-described embodiments but should be determined by not only the appended claims but also the equivalents thereof.

## Claims

1. A credit transaction system comprising:
a relay unit (120) configured to store credit information comprising at least one of credit card information and account information of a credit owner, user information and terminal information on a user designated by the credit owner, and credit limit information on a limit usable by the user;
a user terminal (130) of the user that has purchased a good or service from a seller, configured to transmit information about the user terminal to a seller terminal (140) corresponding to the seller; and
the seller terminal configured to transmit billing records on the good or service purchased by the user in response to receiving the information about the user terminal,
wherein the relay unit is further configured to perform an authentication process for the user corresponding to the user terminal, and relay to process payment for the billing records via the credit information within the credit limit information.

2. The system of claim 1, wherein the relay unit is further configured to match information regarding the credit owner with information regarding the user designated by the credit owner and store the matched information in a form of a table.

3. The system of claim 1, wherein the relay unit is further configured to transmit a remaining amount information excluding an accumulated amount paid by the user for a period set by the credit limit information to the user terminal.

4. The system of claim 1, wherein the relay unit is further configured to:
receive a payment request comprising billing records regarding the good or service purchased by the user,
when sum of an accumulated amount paid by the user for a predetermined period and an amount for the billing records is within an amount for the credit limit information, transfer a payment request regarding the billing records to a payment server of a credit business company based on the credit information, and
after the payment approval by the payment server, transmit payment complete information to at least one of the user terminal and the seller terminal.

5. A credit transaction apparatus comprising:
a credit grant information storage unit (310) configured to store at least one of credit card information and account information of a credit owner, user information and terminal information regarding a user designated by the credit owner, and credit limit information regarding a limit usable by the user;
a payment request receiver (320) configured to receive a payment request comprising billing records regarding a good or service purchased by the user;
a payment request transfer unit (330) configured to, when sum of an accumulated amount purchased by the user for a predetermined period and an amount for the billing records is within an amount for the credit limit information, transfer a payment request regarding the billing records to a payment server of a credit business company based on the credit information; and
a payment complete transfer unit (340) configured to, after payment approval by the payment server, transmit payment complete information to at least one of a terminal of the user and a terminal of a seller from which the user has purchased the good or service.

6. The apparatus further comprising:
an excessive payment determine unit (350) configured to, when the sum of the accumulated amount and the billing records exceeds the credit limit information, determine whether a terminal (110) of the credit owner is able to pay an exceeding amount,
wherein when payment is allowed by the terminal of the credit owner, the payment request transfer unit is configured to request the payment server of the credit business company to pay the billing records.

7. A credit transaction method comprising:
storing credit information comprising at least one of credit card information and account information of a credit owner, user information and terminal information on a user designated by the credit owner, and credit limit information on a limit usable by the user;
receiving a payment request comprising billing records on a goods or service purchased by the user from a seller;
when sum of an accumulated amount purchased by the user for a predetermined period and an amount for the billing records is within an amount for the credit limit information, transferring a payment request regarding the billing records to a payment server of a credit business company based on the credit information; and
after payment approval by the payment server, transmitting payment complete information to at least one of a terminal of the user and a terminal of the seller from which the user has purchased the good or service.

8. The method of claim 7 further comprising:
when the sum of the accumulated amount and the billing records exceeds the credit limit information, determining whether a terminal of the credit owner is able to pay the exceeding amount; and
when payment is allowed by the terminal of the credit owner, transferring the payment request regarding the billing records to the payment server of the credit business company.

9. The method of claim 7 or 8 further comprising:
performing an authentication process based on the terminal of the user in response to a payment request received.

10. The method of claim 7 further comprising:
receiving a subscribe registration request comprising the credit information from the credit owner; and
performing an authentication procedure with the credit owner.

11. The method of claim 7 further comprising:
receiving a subscribe registration request comprising the terminal information on the user from the user; and
performing an authentication procedure with the user.

12. The method of claim 7 further comprising:
receiving credit limit information regarding the user from the credit owner;
determining whether the user information provided by the credit owner is registered; and
generating a matching table between the credit owner and the user and storing the same.

13. The method of claim 12 further comprising:
when the user information provided by the credit owner is not registered, performing an authentication procedure with an unregistered user.

14. The method of claim 12 further comprising
providing a result regarding credit transaction content generated between the credit owner and the user to at least one of the credit owner and the user.

15. The method of claim 7 further comprising:
receiving a credit grant request comprising information regarding the credit owner from the user;
determining whether the credit owner provided by the user is registered;
transferring the credit grant request to the credit owner; and
receiving whether to grant the credit to the user and credit limit information from the credit owner.
